# EUROPÄISCHE PATENTANMELDUNG

(11) **EP 2 570 167 A1**
(43) Veröffentlichungstag der Anmeldung: **20.03.2013**
(21) Anmeldenummer: 11181140.2
(22) Anmeldetag: 13.09.2011
(51) Int. Cl.: B01D 29/09, B01D 29/56, G01N 15/06

(54) **Gerät und Verfahren zur diskontinuierlichen Filtration**

(71) Anmelder: Bayer Intellectual Property GmbH, 40789 Monheim (DE)
(72) Erfinder: Dr. Steigmiller, Stefan, 51368 Leverkusen (DE); Sommer, Karsten, 51368 Leverkusen (DE); Knappe, Christoph, 51368 Leverkusen (DE)
(74) Vertreter: BIP Patents

(57) **Zusammenfassung**

Die Erfindung sieht ein Gerät zur diskontinuierlichen Filtration einer Flüssigkeit vor, mit einer Filterstation zum Durchführen einer Filtration, einer Zufuhr zur Zuführung einer gewünschten Menge der zu filtrierenden Flüssigkeit in die Filterstation, und einem relativ zur Station bewegbaren Filtermedium, wobei das Filtermedium mindestens zwei unterschiedliche Membrane aufweist, die zusammen in der Filterstation eine mehrstufige Filtration erzeugen. Ferner betrifft; die Erfindung ein Verfahren zur diskontinuierlichen Filtration einer Flüssigkeit beziehungsweise zur Filtration abgesonderter Flüssigkeitsmengen, mit den folgenden Schritten: Bereitstellen einer Filterstation zum Durchführen einer Filtration, wobei die Filterstation eine Kammer aufweist, in der die Filtration durchgeführt wird; Bewegen bzw. Befördern eines Filtermediums aus einem Vorrat in die Filterstation, wobei das Filtermedium mindestens zwei Membrane, vorzugsweise Flachmembrane, aufweist, die nebeneinander in der Kammer angeordnet werden; und Zuführen einer gewünschten Menge der zu filtrierenden Flüssigkeit in die Kammer, so dass die Flüssigkeit durch die Membrane eine mehrstufige Filtration unterzogen wird.

## Beschreibung

Die vorliegende Erfindung betrifft ein Gerät und ein Verfahren zur diskontinuierlichen Filtration und kommt insbesondere zum Einsatz in der Prozessanalysentechnik in biotechnologischen Prozessen, beispielsweise bei der automatisierten Entnahme von Flüssigkeiten mit anschließender Probenvorbereitung. Allerdings beschränkt sich die vorliegende Erfindung nicht auf solche Anwendungen im biotechnologischen Bereich. Vielmehr kann die vorliegende Erfindung in einer Vielzahl verschiedener Prozesse zur Geltung kommen, bei denen eine automatisierte, diskontinuierliche Filtration gebraucht wird.

Eine Automatisierungsplattform zur vollautomatisierten Entnahme von Flüssigkeiten, Transport, Probenvorbereitung und anschließender Analytik ist z.B. aus der EP-1439472A1 und der EP-2013328A2 bekannt. Diese Vorrichtungen werden u.a. in der Automatisierung von Analysatoren in biotechnologischen Prozessen eingesetzt, z.B. bei Kultivierung von Zellen. Bei einer Kultivierung von Zellen werden standardmäßig Vollproben entnommen, die Zellen und Zellpartikel enthalten. Die vollautomatische Beprobung und Analyse von biologischen Kultivierungsprozessen in kurzen Zeitintervallen bietet die Möglichkeit Schwankungen im variablen Wachstumsprozess von Zellen und Mikroorganismen in technischer Kultivierung frühzeitig zu erkennen und geeignete Maßnahmen zu ergreifen. Anhand einer partikelhaltigen Vollprobe können eine Vielzahl an Analysemethode durchgeführt werden. Einige dieser Methoden benötigen für die dabei verwendeten Verfahren jedoch lediglich den partikelfreien Teil der Vollprobe. Zu diesen Analyseverfahren gehören beispielsweise die Analytik des Kultivierungsmediums mit optischen Messungen oder Flüssigkeitschromatographie, um eine Vielzahl von Ausgangs- und Produktstoffen qualifizieren und/oder quantifizieren zu können.

In vielen Kultivierungsprozessen steht nur ein geringes Volumen an Vollprobe zur Verfügung (z.B. im Bereich von 1 bis 50 ml), welches dann für eine Analyse effizient aufgeteilt werden muss. Daher kann auch für die Partikelabtrennung nur ein Teil dieser Probe verwendet werden. In vollautomatisierten Automatisierungsplattformen mit Probenahme und anschließender Analytik wird angestrebt, dass diese Systeme eine Woche ohne menschlichen Eingriff selbständig arbeiten. Für die dabei benötigte vollautomatische Filtration kleiner Volumina von partikelhaltigen Flüssigkeiten existieren wenige geeignete Verfahren, welche eine hohe Rückhalterate von Partikeln mit gleichzeitig geringen Verlustmengen an Flüssigkeit, Robustheit des Systems und kurzer Prozessdauer des Filtrationsschrittes verbinden.

Für eine automatisierte Filtration von biologischen Proben aus Kultivierungsprozessen ist ein Gerät bekannt, welches die druckluftgesteuerte Filtration einer Probe durch eine Flachmembran realisiert. Dabei ist jedoch sehr problematisch, dass sich das Volumen an Filtrat im dynamischen Kultivierungsprozess mit steigender Partikelanzahl signifikant verringert. Bei höheren Partikeldichten ist es nicht mehr möglich, eine ausreichende Menge an Filtrat aus dem bereitgestellten Probevolumen zu erzeugen. Ferner erfüllt dieses Gerät des Stands der Technik nicht die allgemeinen Anforderungen an Hygiene im Umgang mit Zellen und Mikroorganismen. Durch den langen Transportweg durch das Gerät kann der Filterkuchen Zellrückstände mit zum Teil großem Kontaminationspotential hinterlassen.

Beim Einsatz der Filtertechnik in einer automatisierten Umgebung mit wechselnden Proben muss ebenfalls der Übertrag von Probenbestandteilen auf darauffolgende Filtrationen ausgeschlossen bzw. nur in stark reduziertem Maße erfolgen, um durch Produktverschleppung oder Produktübertrag auszuschließen. Dies ist im besonderen Maße nötig, wenn Kultivierungen von Zellen zur Erzeugung von Pharmazeutika unter Good Manufacturing Practise (GMP) eingesetzt werden, denn hier muss in einer Validierung nachgewiesen werden, dass Produktverschleppung oder Produktübertrag ausgeschlossen sind.

Daher ist eine Aufgabe der Erfindung, ein Gerät und ein Verfahren bereitzustellen, welche eine bis zur Ausschlussgrenze des Filters partikelfreie Probe, z.B. ohne Zellen oder Zellbruchstücke, mit gleichzeitig geringen Verlustmengen und kurzer Prozessdauer erzeugen können, vorzugsweise (voll-)automatisch. Zudem sollten den Anforderungen an Robustheit und Zuverlässigkeit sowohl im Bereich Research & Development als auch in Produktionsumgebungen erfüllt sein. Eine weitere Aufgabe ist es, ein Gerät und ein Verfahren bereitzustellen, bei denen ein Übertrag von Probenbestandteilen auf darauffolgende Filtrationen entweder ausgeschlossen ist oder nur in einem unwesentlichen Maße erfolgen kann.

Die Lösung der Aufgabe erfolgt erfindungsgemäß durch ein Gerät zur diskontinuierlichen Filtration einer Flüssigkeit mit den Merkmalen des Anspruchs 1 sowie durch ein Verfahren mit den Merkmalen des Anspruchs 10. Bevorzugte Ausgestaltungen der Erfindung sind in den Unteransprüchen angegeben.

Gemäß einem Aspekt der Erfindung wird ein Gerät zur diskontinuierlichen Filtration einer Flüssigkeit geschaffen, mit einer Filterstation zum Durchführen einer Filtration, einer Zufuhr zur Zuführung einer gewünschten Menge der zu filtrierenden Flüssigkeit in die Filterstation, und einem relativ zur Filterstation bewegbaren Filtermedium, wobei das Filtermedium mindestens zwei unterschiedliche Membrane aufweist, die zusammen in der Filterstation eine mehrstufige Filtration erzeugen. Die mehrstufige Filtration bedeutet, dass die zu filtrierende Flüssigkeit mindestens zwei Filtrationsstufen erfährt beziehungsweise unterzogen wird, vorzugsweise umfassend eine erste gröbere Filtrationsstufe und eine zweite feinere Stufe.

Auf diese Weise kann eine nahezu partikelfreie Probe mit relativ geringem Flüssigkeitsverlust und kurzer Prozessdauer gewährleistet werden. Die Erfinder haben festgestellt, dass eine mehrstufige Filtration bspw. mit gröberer Vorfiltration und feinerer Endfiltration die Prozessdauer und den Flüssigkeitsverlust deutlich verringert. Selbst wenn mehrere Membrane aufeinander liegen, findet die Filtration in mehreren Stufen statt.

In einer bevorzugten Ausführungsform der Erfindung weist das Filtermedium eine erste Membran und eine zweite Membran auf, von denen jede Membran eine jeweilige Filtrationsstufe bildet. Die Membrane können übereinander in der Filterstation angeordnet sein, wobei die Membrane vorzugsweise Flachmembrane sind, und wobei die erste Membran über beziehungsweise auf der zweiten Membran in der Filterstation angeordnet ist.

In einer bevorzugten Ausführungsform der Erfindung hat die erste Membran eine höhere durchschnittliche oder nominale Porengröße als die zweite Membran und ist der zweiten Membran vorgelagert, sodass die erste Membran eine Vorfiltration der Flüssigkeit erzeugen kann. Somit kann die erste Membran eine erste (Vor-) Filtrationsstufe bilden, die erste Membran kann als Oberflächenfilter und/oder als Tiefenfilter wirken, bevorzugt zur Filtration von Zellen. Die zweite Membran dagegen bildet eine feinere, gegebenenfalls (End-) Filtrationsstufe, welche als Oberflächenfilter und/oder als Tiefenfilter wirken kann, bevorzugt zur Filtration von Zellbruchstücken. Auf beiden Membranen kann sich ein Filterkuchen bilden, der in einer weiteren bevorzugten Ausführung gewaschen und getrocknet werden könnte zur weiteren Verarbeitung oder Analytik. Damit kann die erste Membran größere Partikeln oder Zellen auffangen, während kleinere Partikeln und/oder Zellbruchstücke durch die erste Membran gelangen. Die vorfiltrierte Flüssigkeit kommt dann in Kontakt mit der zweiten Membran, welche die kleineren Partikeln oder Zellbruchstücke auffängt und eine jetzt nahezu partikelfreie Flüssigkeitsprobe durchlässt. Daher wird der Filtration durch die zweite, feinporige Membran eine erste Membran vorgelagert, welche mit abweichender Partikel-Ausschlussgrenze zur ersten Filtrationsmembran das Filtratvolumen bei hoher PartikelDichte im Vergleich zum Stand der Technik entscheidend vergrößert. Somit ist die zweite Membran für die geforderte Abscheiderate und Filtratqualität verantwortlich.

Vorzugsweise sind die erste Membran und die zweite Membran separate Komponenten, die entweder in oder kurz vor der Filterstation zusammengebracht oder miteinander kombiniert sind. In der vorliegenden Erfindung werden spezielle Filtrationsmembrane ausgewählt und eingesetzt, welche sowohl den chemischen Anforderungen an eine quantitative Analyse als auch den strukturell-mechanischen Ansprüchen für einen stabilen, automatisierten Filtrationszyklus entsprechen. Die Materialien und Eigenschaften der jeweiligen Membrane werden deshalb den spezifischen Anforderungen entsprechend ausgewählt. Somit können die ersten und zweiten Membrane z.B. hydrophil oder hydrophob sein, oder je eine von beiden, je nach Anwendung.

In einer bevorzugten Ausführungsform der Erfindung sind die Membrane vorrätig beziehungsweise in einem Vorrat im oder am Gerät gehalten, sodass reine bzw. unbenutzte Membrane für jede Filtration zur Verfügung stehen. Ferner weist das Gerät Beförderungsmittel zum Bewegen beziehungsweise zum Führen der Membrane aus dem Vorrat in die Filterstation auf, wobei das Beförderungsmittel die Membrane nach der Filtration vorzugsweise auch aus der Filterstation bewegt beziehungsweise führt. Typischerweise umfasst der Vorrat eine erste Vorratseinheit für die erste Membran und eine zweite Vorratseinheit für die zweite Membran. Sowohl die erste als auch die zweite Membran sind vorzugsweise als Band konzipiert, sodass die erste Vorratseinheit als erste Rolle oder Spule und die zweite Vorratseinheit als zweite Rolle oder Spule konzipiert sein kann. Mit anderen Worten werden die mindestens zwei Membrane bevorzugt in Rollen bzw. Spulen vorrätig gehalten. Die Breite des eingesetzten Bandes wird entsprechend den strukturell-mechanischen Ansprüchen für einen stabilen, automatisierten Filtrationszyklus gewählt. Durch die Anordnung der Filtrationsmembrane auf unterschiedlichen Rollen bzw. Spulen, kann eine Anpassung an unterschiedliche Partikelgrößen bei einem gleichbleibenden Filtrationsergebnis durch Austausch des oberen bzw. ersten Filtrationsbandes erreicht werden. Dadurch wird eine höhere Flexibilität im Anwendungsspektrum gewährleistet.

Bei voranschreitenden biotechnologischen Prozessen, wie z.B. Fermentationen, kann sich die Anzahl der Zellen oder Mikroorganismen in der zu filtrierenden Flüssigkeit im Laufe der Zeit stark verändern bzw. vergrößern, was im Stand der Technik zu starken Beeinträchtigungen im Filtrationsergebnis geführt hat. Mit der vorliegenden Erfindung können jedoch gute Filtrationsergebnisse auch mit einer stark anwachsenden Anzahl der Zellen oder Mikroorganismen zuverlässig gewährleistet werden.

In einer bevorzugten Ausführungsform der Erfindung ist das Beförderungsmittel derart ausgebildet, dass es die Membrane getrennt aus dem Vorrat nimmt und sie zusammen in die Filterstation führt. Vorzugsweise kann das Beförderungsmittel die Membrane nach der Filtration auch von der Filterstation entfernen. Das Beförderungsmittel umfasst mindestens einen Motor, insbesondere einen elektrischen Motor (z.B. einen Schrittmotor), der die ersten und zweiten Membrane in die Filterstation befördert. Wenn die ersten und zweiten Membrane auf Rollen im Vorrat gelagert sind, kann der mindestens eine Motor entweder diese Rollen unmittelbar betreiben und/oder die Membrane von diesen Rollen abziehen. In einem besonders bevorzugten Ausführungsform der Erfindung werden nach der Filtration die in der Filterstation benutzten Abschnitte der Membrane auf eine Sammelrolle aufgewickelt. Daher kann der mindestens eine Motor die Sammelrolle unmittelbar (diskontinuierlich) betreiben und die Membrane gleichzeitig von den Vorratsrollen für den nächsten Filtrationsgang in die Filterstation ziehen.

In einer bevorzugten Ausführungsform der Erfindung weist die Filterstation eine Kammer auf, in der die Filtration durchgeführt wird. Die Kammer befindet sich in einem Gehäuse, das mindestens einen bewegbaren Gehäuse-Teil aufweist, durch dessen Bewegung die Kammer bzw. das Gehäuse geöffnet und/oder geschlossen werden kann. Die Kammer bzw. das Gehäuse wird geschlossen, um eine Filtration durchzuführen, und wird geöffnet, um die benutzten Membrane aus der Kammer zu entfernen bzw. um reine oder unbenutzte Membrane in die Filterstation bzw. in die Kammer zu befördern. Vorzugsweise hat die Kammer eine Form, die eine Verteilung der zugeführten Flüssigkeit über eine gesamte Fläche des Filtermediums in der Kammer unterstützt beziehungsweise erzeugt, insbesondere derart, dass die Flüssigkeit im Wesentlichen gleichmäßig über das Filtermedium filtriert wird. Vorzugsweise ist die Form der Kammer konisch gestaltet mit einem Öffnungswinkel bevorzugt im Bereich zwischen 90° und 180°, weiter bevorzugt im Bereich zwischen 120° und 180° und noch weiter bevorzugt im Bereich zwischen 150° und 180°. Das Volumen der Kammer ist vorzugsweise deutlich kleiner als ein Volumen bzw. die Menge der zu filtrierenden Flüssigkeit, bspw. eine Größenordnung kleiner oder auch zwei Größenordnungen kleiner. Die Zufuhr ist deshalb vorzugsweise zur Zuführung der gewünschten Menge Flüssigkeit in die Kammer während der Filtration ausgebildet. Die Zufuhr kann somit die gewünschten Menge Flüssigkeit, z.B. unter Druck, kontinuierlich in die Kammer einspeisen und dadurch die Filtration durch das Filtermedium fördern.

In einer bevorzugten Ausführungsform der Erfindung weist die Filterstation ferner eine Stützkonstruktion auf, die das Filtermedium in der Filterstation abstützt und dadurch einer Verformung der Membrane während der Filtration vorbeugt. Die Stützkonstruktion wirkt einer mechanischen Belastung des Filtermediums bei hoher Partikeldichte entgegen, so dass eine plastische Verformung der Membrane während der Filtration möglichst gering gehalten werden kann. Eine solche Verformung kann beim Transport des Bandes zu Beschädigungen und Rissen der Membran führen, was die Laufzeit des Systems sowie die Robustheit, Genauigkeit und Zuverlässigkeit der anschließenden Analytik wiederum stark beeinträchtigt. Weiterhin erhöht die Stützkonstruktion die Filtrationsleistung bzw. die Partikelausschlussrate, da Verformungen der Membranporen durch plastische Veränderungen in der Struktur entgegengewirkt wird.

In einer bevorzugten Ausführungsform der Erfindung umfasst das Gerät ferner ein Steuerungssystem, welches eine Flächengröße beziehungsweise eine Länge des Filtermediums, das in die Filterstation befördert wird, steuert bzw. kontrolliert. In diesem Zusammenhang weist das Steuerungssystem mindestens einen Sensor auf, der die Länge der in die Filterstation beförderten Membrane bzw. Membran-Abschnitte überwacht bzw. erfasst. Der mindestens eine Sensor, bevorzugt mindestens zwei Sensoren, des Steuerungssystems kann bzw. können eine Rotation der Vorratsrollen überwachen bzw. erfassen und dadurch die Bewegung der Membrane durch das Beförderungsmittel kontrollieren. Zudem kann das Steuerungssystem vorzugsweise die Zuführung der gewünschten Menge der zu filtrierenden Flüssigkeit in die Filterstation bzw. in die Kammer steuern. Ferner kann das Steuerungssystem auch ein Öffnen und ein Schließen der Filterkammer bzw. des Gehäuses steuern, so dass die Filtration als ein diskontinuierliches, Dead-End- oder Batch-Verfahren für einzelne abgesonderte Flüssigkeitsmengen vollautomatisiert werden kann.

Gemäß einem anderen Aspekt der Erfindung kann das wie vorstehend beschriebene Gerät in eine vollautomatisierte oder semiautomatisierte Automatisierungsplattform integriert werden, vorzugsweise als modulare Einheit. Diese Plattform übernimmt die Probenahme aus Prozessen, bevorzugt aus Bioreaktoren zur Kultivierung von Zellen, sowie deren Vorbereitung. Nach Partikelabtrennung mittels diskontinuierlicher Filtration durch das wie vorstehend beschriebene Gerät werden vorzugsweise bei dem System verschiedene Analysemethoden (z.B. Zellzählung, Medienanalyse, Produktquantifizierung, Produktqualität) vereint. Zudem kann das wie vorstehend beschriebene Gerät einfach in das Steuerungssystem der Automatisierungsplattform integriert werden und wird bevorzugt von diesem automatisch als Gerät erkannt. Daher sieht die Erfindung ein System zur Analyse von Prozessen, insbesondere biologischen Prozessen wie z.B. Kultivierungsprozessen vor, wobei das System ein Gerät, das wie vorstehend beschrieben aus- und weitergebildet sein kann, zur diskontinuierlichen Filtration einer Flüssigkeit bzw. zur Filtration abgesonderter Mengen einer Flüssigkeit aufweist. Vorzugsweise ist das System automatisiert, so dass eine Filtration zur Vorbereitung einer Probe in vorbestimmten Zeitintervallen mit dem Gerät durchgeführt werden kann.

Gemäß einem weiteren Aspekt der Erfindung wird ein Verfahren zur diskontinuierlichen Filtration einer Flüssigkeit bzw. zur Filtration abgesonderter Flüssigkeitsmengen geschaffen, mit den folgenden Schritten: Bereitstellen einer Filterstation zum Durchführen einer Filtration, wobei die Filterstation eine Kammer aufweist, in der die Filtration durchgeführt wird; Bewegen bzw. Befördern eines Filtermediums aus einem Vorrat in die Filterstation, wobei das Filtermedium mindestens zwei Membrane, vorzugsweise Flachmembrane, aufweist, die nebeneinander in der Kammer angeordnet werden; und Zuführen einer gewünschten Menge der zu filtrierenden Flüssigkeit in die Kammer, so dass die Flüssigkeit durch die Membrane einer mehrstufigen Filtration unterzogen wird.

In einer bevorzugten Ausführungsform der Erfindung befindet sich die Kammer in einem Gehäuse, das mindestens einen bewegbaren Gehäuse-Teil aufweist, um die Kammer zu öffnen oder zu schließen, und das Verfahren weist folgende Schritte auf: Öffnen der Kammer zum Bewegen bzw. Befördern des Filtermediums in die Filterstation; Schließen der Kammer zum Durchführen der Filtration; und Abführen bzw. Abziehen der filtrierten Flüssigkeit von der Kammer während der Filtration der gewünschten bzw. abgesonderten Flüssigkeitsmenge.

In einer bevorzugten Ausführungsform der Erfindung werden die mindestens zwei Membrane getrennt aus dem Vorrat genommen und entweder in oder kurz vor der Filterstation zusammengeführt oder kombiniert. In einer besonders bevorzugten Ausführungsform der Erfindung sind die Membrane als bandartige Flachmembrane gestaltet, die auf jeweiligen Rollen im Vorrat gelagert sind und das Verfahren weist den folgenden weiteren Schritt auf: Steuern einer Länge der Membrane, die von den Rollen aus dem Vorrat in die Filterstation für eine Filtration befördert werden.

In einer bevorzugten Ausführungsform der Erfindung weist das Verfahren den folgenden weiteren Schritt auf: Spülen der Kammer mit einer Reinigungsflüssigkeit, nachdem mit der zugeführten Flüssigkeit die mehrstufige Filtration unterzogen wurde. Das Spülen der Kammer umfasst die folgenden Schritte: Öffnen der Kammer und Bewegen des benutzten Filtermediums aus der Kammer bzw. aus der Filterstation; Schließen der Kammer und Zuführen der Reinigungsflüssigkeit durch die Kammer, um Restbestände der zu filtrierenden Flüssigkeit zu entfernen, wobei das Spülen vorzugsweise eine Rückspülung der Kammer umfasst, in dem die Reinigungsflüssigkeit in einer der Filtration entgegengesetzten Richtung durch die Kammer fließt.

In einer bevorzugten Ausführungsform der Erfindung weist das Verfahren den folgenden weiteren Schritt auf: Verteilen der zugeführten Flüssigkeit über eine gesamte Fläche des Filtermediums in der Kammer, so dass die Flüssigkeit im Wesentlichen gleichmäßig über das Filtermedium filtriert wird. Das Verteilen der zugeführten Flüssigkeit wird vorzugsweise durch die Form der Kammer bewirkt.

Nachfolgend wird die Erfindung unter Bezugnahme auf die anliegende Zeichnung anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

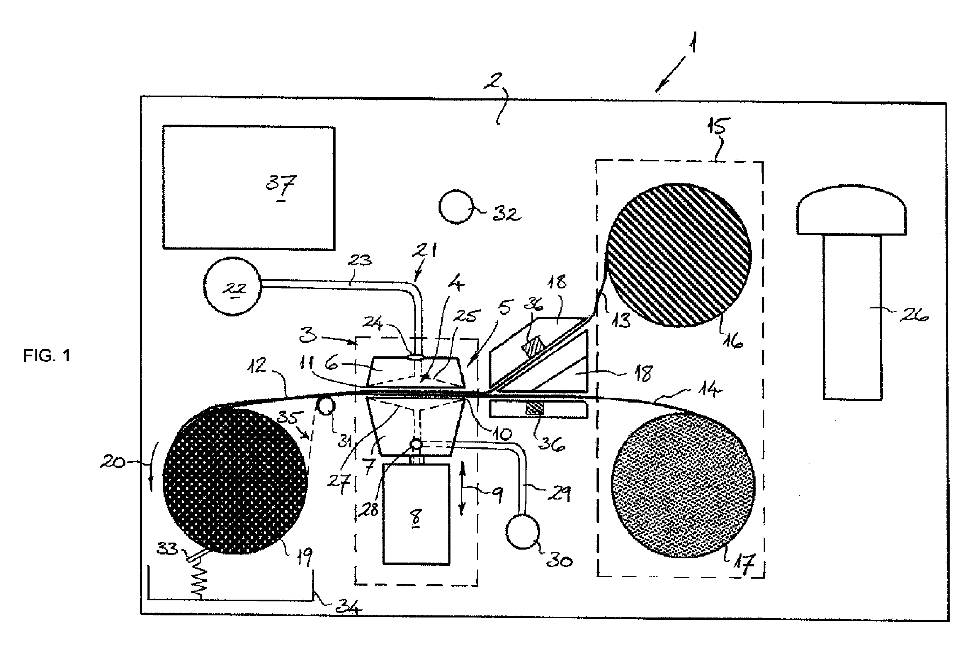

Fig. 1: eine schematische Darstellung eines erfindungsgemäßen Gerätes zur diskontinuierlichen Filtration bzw. zur Filtration abgesonderter Flüssigkeitsmengen.

Das in der Figur 1 dargestelltes Gerät 1 zur diskontinuierlichen Dead-End Filtration einer Flüssigkeit ist modular gestaltet und in einer Box 2 mit Hilfe von Metallplatten, insbesondere Aluminiumplatten, befestigt. Das Gerät 1 umfasst eine Filterstation 3 (dargestellt als gestrichelten Kasten) zum Durchführen der diskontinuierlichen Filtration, wobei die Filterstation 3 eine Kammer 4 aufweist, in der die Filtration durchgeführt wird. Die Kammer 4 befindet sich in einem schließbaren Gehäuse 5, welches in diesem Ausführungsbeispiel aus einem oberen Gehäuse-Teil 6 und einem unteren Gehäuse-Teil 7 besteht. Der untere Gehäuse-Teil 7 ist mit einem Hubantrieb 8 verbunden, der den unteren Gehäuse-Teil 7 auf und ab in der vertikalen Richtung 9 bewegen kann, um das Gehäuse 5 und damit auch die Kammer 4 entweder zu schließen oder zu öffnen. Wenn der Hubantrieb 8 den Gehäuse-Teil 7 vertikal nach oben bewegt, wird ein äußerer Rand 10 des unteren Gehäuse-Teils 7 auf einen äußeren Rand 11 des oberen Gehäuse-Teils 6 gedrückt und die Kammer 4 dabei geschlossen. Eine Dichtung kann an den Rändern 10, 11 zwischen den Gehäuse-Teilen 6, 7 durch ein ringförmiges Dichtungselement aus Stahl, Edelstahl, Silikon, PTFE, PFA, PEEK, EPDM, Viton^{®}, bevorzugt aus Fluorelastomeren oder Kautschuk ausgebildet sein. Wenn der Gehäuse-Teil 7 mit dem Hubantrieb 8 dann vertikal nach unten zurück zur Position in Figur 1 bewegt wird, wird die Kammer 4 wieder geöffnet. Diese Zusammenführung der Gehäuse-Teile 6, 7 kann beispielsweise mit einem magnetischen, pneumatischen oder bevorzugt elektrischen Antrieb 8 realisiert werden.

Ferner weist das Gerät 1 ein relativ zur Filterstation 3 bewegbares Filtermedium 12, das in diesem Ausführungsbeispiel aus einer ersten oberen Membran 13 und einer zweiten unteren Membran 14 besteht. Die erste Membran 13 hat eine höhere durchschnittliche oder nominale Porengröße (z.B. im Bereich von 1 bis 200 µm) als die zweite Membran 14 (z.B. im Bereich von 0,01 bis 2 µm) aber jede Membran 13, 14 ist eine Flachmembran und als Band mit einer Breite im Bereich von etwa 2 bis 200 mm, bevorzugt von etwa 30 bis 50 mm ausgebildet. Die ersten und zweiten Membrane 13, 14 sind in einem Vorrat 15 auf jeweiligen Rollen 16, 17 gelagert und werden von den Rollen 16, 17 aus dem Vorrat 15 durch ein Führungsstück 18 derart zusammen in die Filterstation 3 zusammengeführt, dass die erste Membran 13 auf der zweiten Membran 14 in der Kammer 4 angeordnet ist. Die Filtermembrane 13, 14 erstrecken sich in und durch die Kammer 4 und werden zusammen auf eine Sammelrolle 19, in einer weiteren bevorzugten Ausführung (nicht gezeigt) einzeln auf mehreren Sammelrollen getrennt aufgewickelt. Die Sammelrolle 19 wird von einem Schrittmotor (nicht gezeigt) in Richtung 20 periodisch betrieben, wenn das Gehäuse 5 geöffnet wird, was wiederum die beiden Membrane 13, 14 dann gleichzeitig aus dem Vorrat 15 zieht und sie zusammen in die Filterstation 3 bzw. in die Kammer 4 befördert.

Wenn das Gehäuse 5 geschlossen wird, wird die Kammer 4 an den Rändern 10, 11 durch die mechanische Zusammenführung der Gehäuse-Teile 6, 7 abgedichtet, so dass die ersten und zweiten Membrane 13, 14 dann eine zweistufige Filtration in der Kammer 4 erzeugen können. Hierzu weist das Gerät 1 eine Zufuhr 21 zur Zuführung einer gewünschten Menge der zu filtrierenden Flüssigkeit in die Filterstation 3 auf, wobei die Zufuhr 21 ein Ventil 22 und einen Schlauch 23 umfasst, welche die zu filtrierende Flüssigkeit über einen Einlass 24 des oberen Gehäuse-Teils 6 in die Kammer 4 einspeisen können. Da das Gerät 1 als Bestandteil eines Automatisierungssystems zur Analyse von biologischen Kultivierungsprozessen konzipiert worden ist, wird es für die Abtrennung biologische Partikel, bevorzugt Zellen bzw. Einzellern (Bakterien, Hefen, Zellkulturzellen, Pflanzenzellen, Algen, usw.), verwendet, welche für Kultivierungsprozesse eingesetzt werden. Eine gewünschte oder vorbestimmte Menge der zu filtrierende Flüssigkeit wird somit in vorbestimmten Zeitintervallen aus dem Kultivierungsprozess automatisch entnommen und zur Probenvorbereitung über die Zufuhr 21 in die geschlossene Kammer 4 eingespeist, wo die biologischen Partikel bzw. Zellen und Zellbruchstücke von der Probe durch das Filtermedium 12 abgetrennt werden.

Im oberen Gehäuse-Teil 6 hat die Kammer 4 eine konische oder kegelförmige Gestaltung 25 mit einem sehr flachen Öffnungswinkel im Bereich zwischen 150° und 180°, welche eine Verteilung der zugeführten Flüssigkeit über eine gesamte Fläche des Filtermediums 12 in der Kammer 4 unterstützt oder erzeugt. Somit kann die Flüssigkeit im Wesentlichen gleichmäßig über das Filtermedium 12 filtriert werden. Die Größe der Filterfläche kann durch den Aufbau des Gehäuses 5 anwendungsgemäß gestaltet werden. In diesem Ausführungsbeispiel ist die Filterfläche größer als 4 cm², bspw. im Bereich 5 bis 10 cm². Das Volumen der zugeführten Flüssigkeit in diesem Ausführungsbeispiel ist etwa 20 ml, wobei das Volumen der Kammer 4 im oberen Gehäuse-Teil 6 etwa nur 1 ml beträgt. Wenn die Flüssigkeit mittels eines Bürettenantriebs 26 (oder alternativ mittels einer Schlauchpumpe oder ähnlichen Pumpen) in die Kammer 4 gefördert wird, wird sie deshalb auch gleichzeitig durch die beiden Membrane 13, 14 gefördert. Somit kann die Zufuhr 21 die gewünschten Menge Flüssigkeit unter Druck (z.B. im Bereich von 1 bis 2 bar) kontinuierlich in die Kammer 4 einspeisen und dadurch die Filtration durch das Filtermedium 12 fördern. Im unteren Gehäuse-Teil 7 hat die Kammer 4 auch eine konische oder kegelförmige Gestaltung 27 (invertiert gegenüber dem oberen Teil) mit einem Volumen von etwa 1,5 ml, wo die nun filtrierte Flüssigkeit über einen Auslass 28, einen Schlauch 29 und ein Ventil 30 von der Filterstation 3 abgeführt bzw. abgezogen wird. Diese konische Gestaltung 27 des unteren Teils 7 unterstützt oder begünstigt das Sammeln und Ablaufen der Flüssigkeit, und in einer bevorzugten Ausführung unterstützt Bürette 26 durch Ziehen des Filtrats den Filtrationsvorgang.

Die ersten und zweiten Membrane 13, 14 bilden jeweils eine Filtrationsstufe für die zugeführte Flüssigkeit. Genauer gesagt, dient die erste Membran 13 einer Vorfiltration, welche größere Partikeln und Zellen auffängt, während kleinere Partikeln und Zellbruchstücke durch die erste Membran 13 gelangen. Die vorfiltrierte Flüssigkeit kommt dann in Kontakt mit der zweiten Membran 14, welche die kleineren Partikeln oder Zellbruchstücke auffängt und eine nahezu partikelfreie Flüssigkeitsprobe zum Auslass 28 durchlässt. Obwohl nicht explizit gezeigt in Figur 1, ist im unteren Gehäuse-Teil 7 eine Stützkonstruktion fest eingebaut oder eingelegt, welche die Membrane 13, 14 bei der Filtration gegen eine Verformung schützt und ebenfalls dem späteren Transport des Filtermediums 12 dient. Die Stützkonstruktion kann als Stützelement ausgebildet sein und erstreckt sich quer über die Filterfläche (vorzugsweise in der Ebene der Filtermembrane) als Gitter oder offenes Gestell, das einer mechanischen Belastung des Filtermediums 12 bei hoher Partikeldichte in der Flüssigkeit entgegenwirkt, um eine plastische Verformung der Membrane 13, 14 während der Filtration gering zu halten und Reißen der Membranen 13, 14 zu verhindern.

Nachdem die abgesonderte Menge der zu filtrierenden Flüssigkeit durch die Filterstation 3 einer mehrstufigen Filtration unterzogen wurde, wird der Hubantrieb 8 angesteuert, um das Gehäuse 5 zu öffnen. Die Sammelrolle 19 wird dann in Richtung 20 angetrieben, um das nun benutzte und verbrauchte Filtermedium 12 aus der Filterstation 3 zu ziehen - vorzugsweise bis über eine Stützrolle 31 außerhalb der Filterstation 3 hinaus - und damit auch reine, unbenutzte Flachmembrane 13, 14 durch das Führungsstück 18 in die Filterstation 3 zu bewegen. Die Kammer 4 bzw. das Gehäuse 5 wird dann über den Hubantrieb 8 wieder geschlossen und ein Spülgang zum Spülen der Kammer 4 mit einer Spüllösung wird durchgeführt. Das Spülen erfolgt als eine Rückspülung, in dem die Reinigungslösung über ein Spülventil 32 und den Auslass 28 rückwärts vom unteren Gehäuse-Teil 7 durch das neue Filtermedium 12 und durch die Kammer 4 im oberen Gehäuse-Teil 6 fließt bzw. gefördert wird. Dadurch werden die Restbestände der Partikeln, Zellen und Flüssigkeit aus der Kammer 4 entfernt, um sicherzustellen, dass der Übertrag von Probenbestandteilen auf darauffolgende Filtrationen und damit eine Produktverschleppung oder Produktübertrag ausgeschlossen ist. Nach diesem Spülgang mit einem geeigneten Volumen an Reinigungsflüssigkeit (z.B. im Bereich von 1 bis 50 ml, bevorzugt 5 ml) wird das Gehäuse 5 wieder geöffnet und das Filtermedium 12 im selben Maß weiter auf die Sammelrolle 19 aufgewickelt bis reine, unbenutzte Flachmembrane 13, 14 wieder in der Station 3 für den nächsten Filtrationsgang bereit liegen.

Die Partikel und Zellen bzw. Zellbruchstücke, die auf dem Filtermedium 12 als Filterkuchen zurückbleiben, werden zusammen mit den verbrauchten Flachmembranen 13, 14 auf die Sammelrolle 19 aufgewickelt. Zudem kann der Filterkuchen nach einem Filtrationsgang über eine Reinigungsvorrichtung 33 (z.B. Abstreifer oder Bürste, evtl. gefedert) in einem dafür konzipierten Behälter 34 gesammelt werden. Alternativ könnte durch eine andere Führung 35 des verbrauchten Filtermediums 12 der Filterkuchen weiterhin in das auf der Sammelrolle 19 bereits vorliegende Band eingeschlossen und somit das Verschmutzungs-und Kontaminationsrisiko weiter reduzieren.

Der Vorschub der Filtermembrane 13, 14 in die Filterstation 3 wird durch den Schrittmotor, der die Sammelrolle 19 betriebt, realisiert. Eine relativ präzise Bewegung und Zusammenführung der Filtermembrane 13, 14 kann daher erwartet werden. Dennoch weist das Gerät 1 auch Sensoren 36 auf, die eine Überwachung bzw. Kontrolle des Vorschubes der beiden Membrane 13, 14 mit einer berührungslosen, optischen Reflektionsmessung realisieren. Ferner kann das Gerät 1 weitere Sensoren (nicht gezeigt) aufweisen, die an den Achsen der beiden Vorratsrollen 16, 17 montiert sind und den Drehwinkel dieser Rollen überwachen bzw. kontrollieren. Wie oben schon erwähnt, ist das Gerät 1 vollautomatisch mit einem eingebauten Steuerungssystem, das in der Box 2 untergebracht ist. Ein Display 37 mit Ansteuerung ist vorzugsweise in einer vorderen Platte der Box 2 eingebaut, um eine Bedienung des Geräts 1 zu erleichtern.

### Bezugszeichenliste:

- 1: Gerät
- 2: Box
- 3: Filterstation
- 4: Kammer
- 5: Gehäuse
- 6: Oberer Gehäuse-Teil
- 7: Unterer Gehäuse-Teil
- 8: Hubantrieb
- 9: Richtungen der Hubbewegungen
- 10: Rand des unteren Gehäuse-Teils
- 11: Rand des oberen Gehäuse-Teils
- 12: Filtermedium
- 13: Erste Membran
- 14: Zweite Membran
- 15: Vorrat
- 16: Erste Vorratsrolle
- 17: Zweite Vorratsrolle
- 18: Führungsstück
- 19: Sammelrolle
- 20: Drehrichtung der Sammelrolle
- 21: Zufuhr
- 22: Ventil
- 23: Schlauch
- 24: Einlass
- 25: Konische Gestaltung der Kammer im oberen Gehäuse-Teil
- 26: Bürettenantrieb
- 27: Konische Gestaltung der Kammer im unteren Gehäuse-Teil
- 28: Auslass
- 29: Schlauch
- 30: Ventil
- 31: Stützrolle
- 32: Spülventil
- 33: Reinigungsvorrichtung
- 34: Behälter
- 35: Alternative Führung der Filtermembrane
- 36: Sensor
- 37: Display

## Patentansprüche

1. Gerät (1) zur diskontinuierlichen Filtration einer Flüssigkeit, mit einer Filterstation (3) zum Durchführen einer Filtration, einer Zufuhr (21) zur Zuführung einer gewünschten Menge der zu filtrierenden Flüssigkeit in die Filterstation (3), und einem relativ zur Filterstation (3) bewegbaren Filtermedium (12), wobei das Filtermedium (12) mindestens zwei unterschiedliche Membrane (13, 14) aufweist, die zusammen in der Filterstation (3) eine mehrstufige Filtration erzeugen.

2. Gerät (1) nach Anspruch 1, wobei das Filtermedium (12) eine erste Membran (13) und eine zweite Membran (14) aufweist, von denen jede Membran (13, 14) eine jeweilige Filtrationsstufe bildet, wobei die ersten und zweiten Membrane (13, 14) vorzugsweise Flachmembrane und nebeneinander in der Filterstation (3) angeordnet sind.

3. Gerät (1) nach Anspruch 2, wobei die erste Membran (13) eine höhere durchschnittliche oder nominale Porengröße als die zweite Membran (14) aufweist und der zweiten Membran (14) vorgelagert ist, sodass die erste Membran (13) eine Vorfiltration der Flüssigkeit erzeugen kann.

4. Gerät (1) nach Anspruch 2 oder Anspruch 3, wobei die erste Membran (13) und die zweite Membran (14) separate Komponente sind, die entweder in oder kurz vor der Filterstation (3) zusammengebracht oder miteinander kombiniert sind.

5. Gerät (1) nach einem der Ansprüche 1 bis 4, wobei die Membrane (13, 14) vorrätig beziehungsweise in einem Vorrat (15) im oder am Gerät (1) gehalten sind, sodass reine bzw. unbenutzte Membrane (13, 14) für jede Filtration zur Verfügung stehen, wobei das Gerät (1) ferner Beförderungsmittel (18, 20) zum Bewegen beziehungsweise zum Führen der Membrane (13, 14) aus dem Vorrat in die Filterstation (3) aufweist, wobei das Beförderungsmittel (18, 20) vorzugsweise die Membrane (13, 14) nach der Filtration auch aus der Filterstation (3) bewegt beziehungsweise führt.

6. Gerät (1) nach Anspruch 5, wobei das Beförderungsmittel (18, 20) derart ausgebildet ist, dass es die Membrane (13, 14) getrennt aus dem Vorrat (15) nimmt und zusammen in die Filterstation (3) führt und sie vorzugsweise nach der Filtration auch von der Filterstation (3) entfernt.

7. Gerät (1) nach einem der Ansprüche 1 bis 6, ferner mit einem Steuerungssystem, das eine Flächengröße beziehungsweise eine Länge der unterschiedlichen Membrane (13, 14), die für die mehrstufige Filtration in der Filterstation (3) verantwortlich sind, kontrolliert.

8. Gerät (1) nach einem der Ansprüche 1 bis 7, wobei die Filterstation (3) eine Kammer (4) aufweist, in der die Filtration durchgeführt ist, und wobei die Kammer (4) eine Form (25) hat, die eine Verteilung der zugeführten Flüssigkeit über eine gesamte Fläche des Filtermediums (12) in der Kammer (4) unterstützt beziehungsweise erzeugt, insbesondere derart, dass die Flüssigkeit im Wesentlichen gleichmäßig über das Filtermedium (12) filtriert wird, wobei die Form (25) der Kammer (4) vorzugsweise konisch ist, mit einem Öffnungswinkel bevorzugt im Bereich zwischen 90° und 180°, weiter bevorzugt im Bereich zwischen 120° und 180° und noch weiter bevorzugt im Bereich zwischen 150° und 180°.

9. Gerät (1) nach einem der Ansprüche 1 bis 8, wobei die Filterstation (3) ferner eine Stützkonstruktion aufweist, die das Filtermedium (12) abstützt und einer Verformung und/oder einem Reißen der Membrane (13, 14) während der Filtration entgegenwirkt.

10. Verfahren zur diskontinuierlichen Filtration einer Flüssigkeit beziehungsweise zur Filtration abgesonderter Flüssigkeitsmengen, mit folgenden Schritten:
Bereitstellen einer Filterstation zum Durchführen einer Filtration, wobei die Filterstation eine Kammer aufweist, in der die Filtration durchgeführt wird;
Bewegen bzw. Befördern eines Filtermediums aus einem Vorrat in die Filterstation, wobei das Filtermedium mindestens zwei Membrane, vorzugsweise Flachmembrane, aufweist, die nebeneinander in der Kammer angeordnet werden; und
Zuführen einer gewünschten Menge der zu filtrierenden Flüssigkeit in die Kammer, so dass die Flüssigkeit durch die Membrane einer mehrstufigen Filtration unterzogen wird.

11. Verfahren nach Anspruch 10, wobei sich die Kammer in einem Gehäuse befindet, das mindestens einen bewegbaren Gehäuse-Teil aufweist, um die Kammer zu öffnen oder zu schließen, und wobei das Verfahren folgende weitere Schritte aufweist:
Öffnen der Kammer zum Bewegen bzw. Befördern des Filtermediums in die Filterstation;
Schließen der Kammer zum Durchführen der Filtration; und
Abführen bzw. Abziehen der filtrierten Flüssigkeit von der Kammer während der Filtration der gewünschten bzw. abgesonderten Flüssigkeitsmenge.

12. Verfahren nach Anspruch 10 oder Anspruch 11, wobei die mindestens zwei Membrane des Filtermediums getrennt aus dem Vorrat genommen und entweder in oder kurz vor der Filterstation zusammengeführt bzw. kombiniert werden.

13. Verfahren nach Anspruch 12, wobei die Membrane als bandartige Flachmembrane gestaltet sind, die auf jeweiligen Rollen im Vorrat gelagert sind, und wobei das Verfahren folgenden Schritt aufweist:
Steuern einer Länge der Membrane, die von den Rollen aus dem Vorrat in die Filterstation für eine Filtration befördert werden.

14. Verfahren nach einem der Ansprüche 10 bis 13, mit dem Schritt:
Spülen der Kammer mit einer Reinigungsflüssigkeit, nachdem der zugeführten Flüssigkeit die mehrstufige Filtration unterzogen wurde, wobei das Spülen der Kammer folgende Schritte aufweist:
Öffnen der Kammer und Bewegen des benutzten Filtermediums aus der Kammer bzw. aus der Filterstation,
Schließen der Kammer und Zuführen der Reinigungsflüssigkeit durch die Kammer, um Restbestände der zu filtrierenden Flüssigkeit zu entfernen,
wobei das Spülen vorzugsweise eine Rückspülung der Kammer umfasst, in dem das Spülmittel in einer der Filtration entgegengesetzten Richtung durch die Kammer fließt.

15. System zur Analyse von Prozessen, insbesondere biologischen Prozessen, wobei das System eine vollautomatisierte oder semiautomatisierte Automatisierungsplattform aufweist, in der ein Gerät zur diskontinuierlichen Filtration gemäß einem der Ansprüche 1 bis 9 integriert ist, wobei das Gerät vorzugsweise als modulare Einheit ausgebildet ist..
